# EUROPÄISCHE PATENTANMELDUNG

(11) **EP 0 844 250 A1**
(43) Veröffentlichungstag der Anmeldung: **27.05.1998**
(21) Anmeldenummer: 97119484.0
(22) Anmeldetag: 07.11.1997
(51) Int. Cl.: C07F 9/40, B01J 31/24, C07F 9/38, C07F 9/655, C07F 9/6553, C07F 9/58

(54) **Verfahren zur Herstellung arylsubstituierter aminoacylierter Phosphonsäurederivate mit Hilfe von Metallkomplexen chiraler amphiphiler Liganden**

(30) Priorität: 20.11.1996 DE 19647885; 17.07.1997 DE 19730657
(71) Anmelder: Degussa Aktiengesellschaft, 60311 Frankfurt (DE)
(72) Erfinder: Oehme, Günther, Prof. Dr., 18059 Rostock (DE); Schmidt, Ute, 18184 Neu Roggentin (DE); Ziegler, Silke, 22049 Hamburg (DE); Grassert, Ingrid, Dr., 18059 Rostock (DE); Fischer, Christine, Dr., 18119 Rostock, Warnemünde (DE)

(57) **Zusammenfassung**

Die Erfindung betrifft ein Verfahren zur Herstellung arylsubstituierter aminoacylierter Phosphonsäurederivate mit Hilfe von Metallkomplexen chiraler amphiphiler Liganden, indem erfindungsgemäß α-N-acylgeschützte β-substituierte Alkenphosphonderivate in Gegenwart eines chiralen Rhodiumkatalysators in einem Lösungsmittel oder einer Suspension asymmetrisch hydriert werden. Durch den Einsatz des micellbildenden Katalysators wird die Hydrierung ungesättigter Phosphonsäurederivate in Wasser mit hoher Reaktionsgeschwindigkeit ermöglicht, wobei sehr gute Enantiomerenüberschüsse erhalten werden.

## Beschreibung

Die Erfindung betrifft ein Verfahren zur Herstellung α-aminoacylierter arylsubstituierter Phosphonsäurederivate in optisch aktiver Form mit Hilfe von chiralen amphiphilen Metallkomplexkatalysatoren durch neuartige micellare asymmetrische katalytische Hydrierung geeigneter Vorstufen.

Verfahren zur asymmetrischen katalytischen Hydrierung in Gegenwart amphiphiler Metall-komplexkatalysatoren sind nur für Zweiphasenreaktionen bekannt.

Bekannt sind auch micellbildende chirale Metallkomplexe als Katalysatoren bei asymmetrischen Hydrolysereaktionen
[(a) P. Scrimin, U. Tonellato, 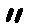 Ligand surfactants: Aggregation, Cations Binding and Transport, and Catalytic Properties" in *Surfactants in Solution*, Vol. 11, Hrsg. K. L. Mittal and D. O. Shah, Plenum Press, New York, **1991**;
(b) P. Scrimin, P. Tecilla, U. Tonellato, *J. Org. Chem*. **1994**, *59*, 4194; (c) C. A. Bunton, P. Scrimin, P. Tecilla, *J. Chem.Soc*., *Perkin Trans. 2* **1996**, 419; (d) J. Budka, F. Hampl, F. Liska, P. Scrimin, P. Tecilla, U. Tonellato, *J. Mol. Cat*. **1996**, *104* L201].

Bekannt sind weiterhin eine Reihe von Reaktionen katalysiert durch chirale Rhodiumphosphankomplexe in Gegenwart achiraler Detergentien in Wasser, bei denen die Bildung der micellaren Systeme durch die zugesetzten Detergentien bewirkt wird. So können bei der Hydrierung von Dehydroaminosäurederivaten dabei Enantioselektivitäten bis zu 97 % ee erzielt werden [(a) G. Oehme, E. Paetzold, R. Selke, *J. Mol. Catal*. **1992**, *71*, L1; (b) I. Grassert, E. Paetzold, G. Oehme, *Tetrahedron* **1993**, *49*, 6605; (c) A. Kumar, G. Oehme, J. P. Roque, M. Schwarze, R. Selke, *Angew. Chem*. **1994**, *106*, 2272; (d) G. Oehme, I. Grassert, H. N. Flach, 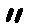 Asymmetric Complex Catalysis in Micellar systems" in *Aqueous Organometallic Chemistry and Catalysis*, Hrsg. I. T. Horváth, F. Joó, Kluwer Academic Publishers, Dordrecht, **1995**, S. 245; (e) H. N. Flach, I. Grassert, G. Oehme, M. Capka, *Colloid Polym. Sci*. **1996**, *274*, 261].

Es ist ferner bekannt, daß oberflächenaktive chirale sulfonierte Bisphosphane in Form ihrer Rhodiumkomplexe in Wasser oder Wassergemischen mit organischen Lösungsmitteln mit mäßigem Erfolg - die Stereoselektivität und Aktivität betreffend - zur asymmetrischen Hydrierung von Aminosäurevorstufen eingesetzt werden können (H. Ding, B. E. Hanson, J. Bakos, *Angew. Chem*. **1995**, *107*, 1728).

Weiterhin ist bekannt, daß sich chirale α-aminoacylierte Phosphonsäurederivate mittels asymmetrischer Hydrierung entsprechender Dehydrovorstufen in Gegenwart optisch aktiver Rhodiumkomplexkatalysatoren herstellen lassen, wie auch analoge racemische Verbindungen mit bekannten achiralen Katalysatoren, wobei hohe Reaktionsgeschwindigkeiten und Selektivitäten ≥ 90 % ee nur in organischen Lösungsmitteln erreicht werden (U. Schmidt, G. Oehme, H. W. Krause, *Synth. Commun*. **1996**, *26*, 777 und deutsche Patentanmeldung 195 19 983.9).

So haben Schöllkopf et al. (U. Schöllkopf, I. Hoppe, A. Thiele, *Liebigs Ann. Chem*. **1985**, 555-559) durch Hydrierung von α-N-Formyl-α, β-dehydrophosphonsäuredimethylestern mit dem bekannten optisch aktiven DIOP-Rh-Katalysator bei der Synthese von AlaP optische Ausbeuten von 76 % ee erreicht. In einem anderen Verfahren (US-A-5 321 153) werden mit einem DIPAMP-Rh-Komplexkatalysator die Z-geschützten α-Amino-α, β-dehydrophosphon-säureester zu den gesättigten Verbindungen mit optischen Ausbeuten um 90 % ee hydriert.

Die in all diesen Fällen notwendigen α-aminoacylierten-α, β-ungesättigten Vorstufen werden nach bekannten Syntheserouten hergestellt [(a) U. Schöllkopf, I. Hoppe, A. Thiele, *Liebigs Ann. Chem*. **1985**, 555-559); (b) V. S. Brovarets, K. V. Zyuz, L. N. Budnik, V. A. Solodenko, B. S. Dratsch, *Zh. Obsch. Khim*. **1993**, *63*, 1259; (c) US-A-5 321 153].

Bekannt sind neben Racemattrennungen verschiedene stöchiometrische Verfahren, die sich alle optisch aktiver Auxiliare bedienen und ebenfalls zur Herstellung optisch aktiver α-Aminophosphonsäuren führen [(Reviewartikel: (a) B. Dharwan, D. Redmore, *Phosphorous, Sulfur and Silicon* **1987**, *32*, 119; (b) V. P. Kukhar, V. A. Soloshonov, V. A. Solodenko, *Phosphorous, Sulfur and Silicon* **1994**, *92*, 239].

Aufgabe der Erfindung ist es, ein katalytisches Hydrierverfahren zur Herstellung von chiralen α-N-acylierten Aminophosphonsäurederivaten zu entwickeln, das den neuen Katalysatortyp gemäß deutscher Patentanmeldung 196 17 941.6 einschließt und dadurch bei Verwendung bekannter ungesättigter Phosphonsäurederivate unter Erweiterung der Lösungsmittelpalette hohe chemische und optische Ausbeuten an Zielprodukten ermöglicht und wobei die Nachteile anderer Verfahren vermieden werden.

Diese Aufgabe wird anspruchsgemäß gelöst.

Erfindungsgemäß wird ein α-N-acylgeschütztes β-substituiertes Alkenphosphonsäurederivat der allgemeinen Fomel II, 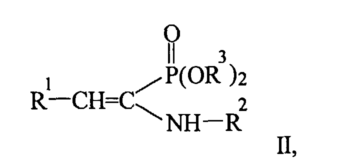 in der
R¹, R² und R³ die in der allgemeinen Formel I angegebenen Bedeutungen besitzen, in Gegenwart eines chiralen Rhodiumkatalysators der allgemeinen Formel III, 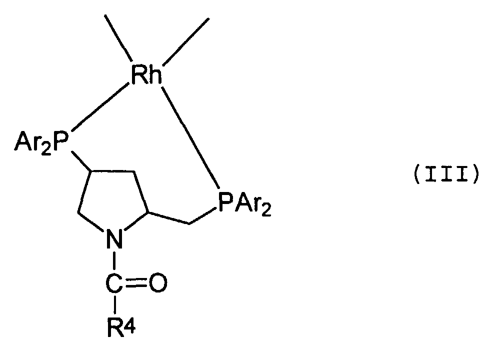 in der
R⁴ = (OCH₂-CH₂)ₙOCₘH₂ₘ₊₁ und n ≥ 4 und m ≥ 8 und
Ar = alkyl- oder halogensubstituierte Phenylreste bedeuten, oder
   wie er in der deutschen Patentanmeldung 196 17 941.6 beschrieben worden ist, in einem Lösungsmittel, vorzugsweise in Wasser, oder einer Suspension bei Temperaturen zwischen -20 °C und +50 °C und einem Wasserstoffdruck zwischen 0.1 und 10 MPa, besonders bevorzugt bei 0.1 MPa Wasserstoffdruck, und einem Katalysator/Substratverhältnis von 1:50 bis zu 1:2000, vorzugsweise bei 1:100 bis 500, asymmetrisch hydriert.

Die freien Valenzen des Zentralatoms des Komplexes der allgemeinen Formel III sollen andeuten, daß hier nicht näher bestimmte Liganden am Zentralatom koordiniert sind. Die genaue Ligandensphäre bei der Hydrierung ist von den potentiell zur Verfügung stehenden Ligandenmolekülen in der Mischung abhängig, auf jeden Fall aber variabel.

Erfolgt die Hydrierung bei tiefen Temperaturen, dient insbesondere ein Alkohol oder Gemische dergleichen mit Wasser als Lösungsmittel; Wasser wird dagegen bevorzugt bei +25 °C eingesetzt.

Die erfindungsgemäß erhaltenen arylsubstituierten aminoacylierten Phosphonsäurederivate besitzen die allgemeine Formel I, 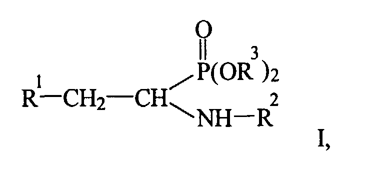 in der
- R¹ =: Phenyl, Fluorphenyl wie 2-, 3- oder 4-Fluorphenyl, Nitrophenyl wie 4-Nitrophenyl,Trifluormethyl, Alkylphenyl wie 4-Methylphenyl, Alkoxyphenyl wie 4-ethoxyphenyl oder Dimethoxyphenyl, Biphenyl, Thienyl, wie 2- oder 3-Thienyl, Furyl, wie 2- oder 3-Furyl, Pyridyl wie 3- oder 4-Pyridyl, Naphthyl wie 1- oder 2-Naphthyl und Anthracenyl,
- R² =: Formyl, Acetyl, Benzoyl, Benzyloxycarbonyl (Cbz), tert.-Butoxycarbonyl (BOC) und o-Nitrobenzoyl sowie
- R³ =: H, Methyl, Ethyl, Propyl und Isopropyl
bedeuten.

Zur Herstellung der Verbindungen der Formel I in optisch aktiver Form werden die prochiralen Vorstufen II unter den angegebenen milden Bedingungen in hoher Geschwindigkeit und in hoher Stereoselektivität durch den chiralen Katalysator asymmetrisch hydriert.
Der Katalysator wird durch Komplexbildung mit geeigneten Donatoratomen durch Umsatz mit Metallkomplexen hergestellt. Dabei ist es vorteilhaft, den genannten Prozeß in situ ablaufen zu lassen.

Das Prinzip dieses Verfahrens beruht auf der Verwendung von organisierten Systemen, die wegen ihrer supramolekularen Strukturen [(a) J. M. Lehn, *Angew. Chem*. **1988**, *100*, 91; (b) F. Vögtle, *Supramolekulare Chemie*, B. G. Teubner, Stuttgart, **1989**] und wegen ihrer Verwendung als Mimetika für Enzymkatalysen; [(a) T. Kunitake, S. Shinkai, *Adv. Phys. Org. Chem*. **1980**, *17*, 435; (b) J. H. Fendler, *Membrane Mimetic Chemistry*, John Wiley & Sons, New York, **1982**; (c) C. A. Bunton, G. Savelli, *Adv. Phys. Org. Chem*. **1986**, *22* 213; (d) F. M. Menger, *Angew. Chem*. **1991**, *103*, 1104; (e) M. L. Carreto, S. Rubio, D. Pérez-Bendito, *Analyst* **1996**, *121*, 33R] großes Interesse beanspruchen.

Die Erfindung ist insbesondere durch den amphiphilen Katalysator gekennzeichnet, der in Wasser Micellen bildet, die den Ablauf von Hydrierreaktionen in Wasser erlauben und gegenüber einem nichtamphiphilen Katalysator in reinem Wasser extrem beschleunigen und für sich bei der Hydrierung von arylsubstituierten aminoacylierten Phosphonsäurederivaten zu Enantiomerenüberschüssen führen, die denen in Methanol als Lösungsmittel vergleichbar werden. So ist bei direktem Vergleich von Beispiel 5 mit den Beispielen 6 und 7 eine außerordentliche Aktivitätssteigerung von 720 min auf 33 min bzw. 55 min Halbwertszeit (t/2) und eine Enantioselektivitätserhöhung von 91 % ee auf bis zu 94 % ee mit den neuen Liganden festzustellen. Die Selektivität läßt sich erfindungsgemäß noch durch Zusatz weiterer chiraler oder achiraler Amphiphiler (siehe Beispiele 8 bis 14), die keinen Metallkomplex gebunden enthalten, erhöhen, wobei vorteilhaft und nahezu optimal 10 bis 20 mol Amphiphil pro mol Katalysator zugesetzt werden sollten, höhere molare Zusätze aber auch toleriert werden.

Die nach dem erfindungsgemäßen Verfahren hergestellten Zielprodukte besitzen wertvolle pharmakologische Eigenschaften, die ihre Anwendung als Arzneimittel möglich machen.

Die Erfindung wird durch die nachfolgenden Beispiele erläutert, ohne sie jedoch einzuengen.

### Durchführungsbeispiele

### Beispiele 1 bis 4

Hydrierprozeß: Allgemeine Vorschrift in Methanol Die Hydrierung von 0.5 mmol α-N-Benzoylamino-β-phenylethylenphosphonsäuredimethylester wird bei 25 °C und 0.1 MPa Wasserstoffdruck in 7.5 ml Methanol unter Zugabe von 0.005 mmol [Rh(COD)₂]BF₄ durchgeführt. Zur Bildung des Katalysators wird das Phosphan und der Rhodiumkomplex in einem sauerstoffreiem Hydriergefäß 15 min gerührt. Danach wird mit der Hydrierung begonnen. Die in den folgenden Beispielen angegebenen Werte für t/2 geben die Zeit für die Aufnahme der Hälfte der theoretischen Wasserstoffmenge an.

### Beispiel 3

(S)-α-N-Benzoylamino-β-phenylethylphosphonsäuredimethylester Nach der Hydrierung (siehe allgemeines Verfahren in Methanol) von α-N-Benzoylamino-β-phenylethylenphosphonsäuredimethylester (0.5 mmol) in 7.5 ml Methanol in Gegenwart von 0.005 mmol des Komplexkatalysators, hergestellt aus 0.005 mol [Rh(COD)₂]BF₄ und 1b (Formel III R¹=O(CH₂CH₂O)₁₀C₁₂H₂₅), wurde das Lösungsmittel im Vakuum abgezogen und der Rückstand in wenig Dichlormethan gelöst, über eine 5 cm Schicht von Kieselgel gefüllte Säule gegeben, wobei der Rhodiumkomplex entfernt und das Filtrat wieder erneut eingeengt wird. Als Eluent wurde dabei Dichlormethan/Methanol=9/1 verwendet. Die Ausbeute betragt 95 bis 99 %. Der Enantiomerenüberschuß betragt 97 % ee und wird durch HPLC an einer Chiracel OD Säule (Fa. Baker Chemicals, Groß Gerau) am Liquid Chromatographen 1090, Hewlett-Packard, bestimmt.
Schmp. 115-118 °C, HPLC > 99 % ee, C₁₇H₂₀NO₄P (333,3 g/mol)

| | | | | |
|---|---|---|---|---|
| Ber. (%): | C 61,25 | H 6,05 | N 4,20 | P 9,29 |
| Gef. (%) | C 61,28 | H 6,12 | N 4,23 | P 9,91 |

[α]_{D}²³ = 101,9 (c = 1.01, Methanol). Die Konfiguration ist (S). ³¹P-NMR: δ 27,1 ppm (CDCl₃).

### Beispiele 5 bis 15

Hydrierprozeß: Allgemeine Vorschrift in Wasser Die Hydrierung von 0.5 mmol α-N-Benzoylamino-β-phenylethylenphosphonsäuredimethylester wird bei 25 °C und 0.1 MPa Wasserstoffdruck in 7.5 ml Wasser unter Zugabe von 0.005 mmol [Rh(COD)₂]BF₄ durchgeführt. Zur Bildung des Katalysators wird das amphiphile Phosphan, der Rhodiumkomplex (und das zusätzliche Amphiphil) in einem sauerstofffreiem Hydriergefäß 15 min gerührt. Danach wird mit der Hydrierung begonnen. Die in den folgenden Beispielen angegebenen Werte für t/2 geben die Zeit für die Aufnahme der Hälfte der theoretischen Wasserstoffmenge an.

### Beispiel 8

(S)-α-N-Benzoylamino-β-phenylethylphosphonsäuredimethylester Nach beendeter Hydrierung von α-N-Benzoylamino-β-phenylethylenphosphonsäure-dimethylester (0.5 mmol) in 7.5 ml Wasser in Gegenwart von 0.005 mmol des Komplexkatalysators, hergestellt aus 0.005 mol [Rh(COD)₂]BF₄ und 1b (Formel III R¹=O(CH₂CH₂O)₁₀C₁₂H₂₅), und 0.1 mmol SDS wird die Mischung mit Chloroform extrahiert und von der wäßrigen Phase abgetrennt. Das Chloroform wird im Vakuum entfernt und der Rückstand in wenig Dichlormethan, über eine 5 cm Schicht von Kieselgel gefüllte Säule gegeben, wobei der Rhodiumkomplex entfernt und das Filtrat wieder erneut eingeengt wird. Als Eluent wurde dabei Dichlormethan/Methanol=9/1 verwendet. Die Ausbeute beträgt 60 bis 70 %. Der Enantiomerenüberschuß beträgt 98 % ee und wird durch HPLC an einer Chiracel OD Säule (Fa. Baker Chemicals, Groß Gerau) am Liquid Chromatographen 1090, Hewlett-Packard, bestimmt.
Schmp. 115-118 °C, HPLC > 99 % ee, C₁₇H₂₀NO₄P (333,3 g/mol)

| | | | | |
|---|---|---|---|---|
| Ber. (%): | C 61,25 | H 6.05 | N 4,20 | P 9,29 |
| Gef. (%): | C 61.47 | H 6,06 | N 4,03 | P 9,38 |

[α]_{D}²³ = 107.2 (c = 1.01, Methanol). Die Konfiguration ist (S). ³¹P-NMR: δ 27,1 ppm (CDCl₃).

Die Beispiele sind tabellarisch zusammengefaßt und wurden gemäß der oben angegebenen Vorschriften analog ausgeführt.
Substrat: α-N-Benzoylamino-β-phenylethylenphosphonsäuredimethylester (0.5 mmol) in 7.5 ml Lösungsmittel mit Hilfe von 0.005 mmol Katalysator.

| Beispiel | Lsgm. | Ligand | zusätzliches Amphiphil (mmol) | t/2 min | ee % Konf. (S) |
|---|---|---|---|---|---|
| 1 | MeOH | **BPPM** | - | 6 | 96 |
| 2 | MeOH | **1a** | - | 6 | 98 |
| 3 | MeOH | **1b** | - | 8 | 97 |
| 4 | MeOH | **1c** | - | 4 | 97 |
| 5 | H₂O | **BPPM** | - | 720 Rh↓ | 91 |
| 6 | H₂O | **BPPM** | - | 33 | 93 |
| 7 | H₂O | **1c** | - | 55 | 95 |
| 8 | H₂O | **1b** | SDS (0.2) | 4 | 98 |
| 9 | H₂O | **1b** | SDS (0.1) | 8 | 97 |
| 10 | H₂O | **1b** | SDS (0.05) | 10 | 97 |
| 11 | H₂O | **1b** | SDS (0.02) | 16 | 96 |
| 12 | H₂O | **1b** | SDS (0.01) | 19 | 95 |
| 13 | H₂O | **1b** | CTAHSO₄ (0.2) | 11 | 98 |
| 14 | H₂O | **1b** | Tween 40 (0.01) | 12 | 96 |
| 15 | H₂O | **1c** | SDS (0.2) | 6 | 98 |
| BPPM: N-t-Butyloxycarbonyl-4-diphenylphosphino-2-diphenylphosphinomethyl-pyrrolidin SDS: Sodiumdodecylsulfat | | | | | |

Die Liganden **1a**, **1b** und **1c** entsprechen folgender Formel:

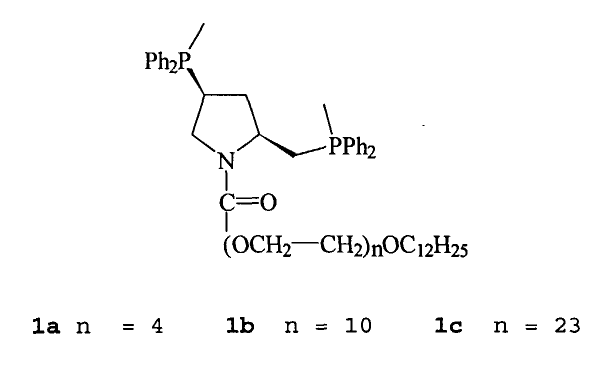

## Patentansprüche

1. Verfahren zur Herstellung optisch aktiver arylsubstituierter Phosphonsäurederivate der allgemeinen Formel I 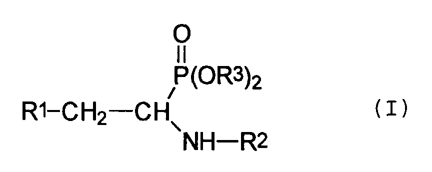 mit Hilfe von Metallkomplexen chiraler amphiphiler Liganden,
**dadurch gekennzeichnet,**
daß man α-N-acylgeschützte β-substituierte Alkenphosphonsäuren der allgemeinen Formel II 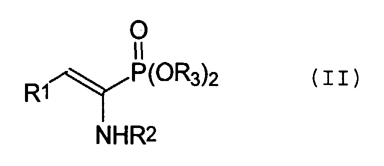 in der
R¹ = Phenyl, Fluorphenyl wie 2-, 3- oder 4-Fluorphenyl, Nitrophenyl wie 4-Nitrophenyl, Trifluormethyl, Alkylphenyl wie 4-Methylphenyl, Alkoxyphenyl wie 4-Methoxyphenyl oder Dimethoxyphenyl, Biphenyl, Thienyl, wie 2- oder 3-Thienyl, Furyl, wie 2- oder 3-Furyl, Pyridyl wie 3- oder 4-Pyridyl, Naphthyl wie 1- oder 2-Naphthyl und Anthracenyl,
R² = Formyl, Acetyl, Benzoyl, Benzyloxycarbonyl (Cbz), tert.-Butoxycarbonyl (BOC) und o-Nitrobenzoyl sowie
R³ = H, Methyl, Ethyl, Propyl und Isopropyl
bedeuten, in Gegenwart eines chiralen Rhodium-Katalysators der allgemeinen Formel III 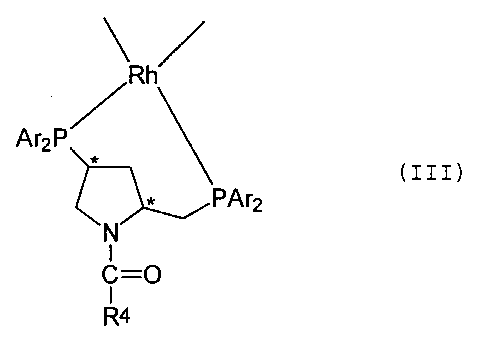 in der
R⁴ = (OCH₂-CH₂)ₙOCₘH₂ₘ₊₁ und n ≥ 4 und m ≥ 8 und
Ar = alkyl- oder halogensubstituierte Phenylreste bedeuten, zu Verbindungen der allgemeinen Formel I hydriert.

2. Verfahren nach Anspruch 1,
**dadurch gekennzeichnet,**
daß die Hydrierung in Wasser oder Wasser-Alkoholgemischen oder in einem Alkohol stattfindet.

3. Verfahren nach Anspruch 2,
**dadurch gekennzeichnet,**
daß der Alkohol Methanol ist.

4. Verfahren nach Anspruch 1,
**dadurch gekennzeichnet,**
daß man bei Temperaturen von -20 °C bis +50 °C hydriert.

5. Verfahren nach Anspruch 1,
**dadurch gekennzeichnet,**
daß man bei einem Wasserstoffdruck zwischen 0,1 und 10 MPa hydriert.

6. Verfahren nach Anspruch 1,
**dadurch gekennzeichnet,**
daß das Katalysator/Substrat-Verhältnis zwischen 1 : 50 und 1 : 2000 liegt.

7. Verfahren nach Anspruch 5,
**dadurch gekennzeichnet,**
daß man die Hydrierung bei einem Wasserstoffdruck von 0,1 MPa durchführt.

8. Verfahren nach Anspruch 6,
**dadurch gekennzeichnet,**
daß das Katalysator/Substrat-Verhältnis zwischen 1 : 100 und 1 : 500 liegt.
